(19) Europäisches Patentamt
European Patent Office
Office européen des brevets

(11) EP 4 661 275 A1

(12) **EUROPEAN PATENT APPLICATION**
published in accordance with Art. 153(4) EPC

(43) Date of publication:
**10.12.2025  Bulletin 2025/50**

(21) Application number: 23919685.0

(22) Date of filing: **01.02.2023**

(51) International Patent Classification (IPC):
**H02M 7/48** (2007.01)     **H02M 1/12** (2006.01)
**H02P 27/08** (2006.01)

(52) Cooperative Patent Classification (CPC):
**H02M 1/12; H02M 7/48; H02P 27/08**

(86) International application number:
**PCT/JP2023/003220**

(87) International publication number:
**WO 2024/161546 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventor: **KOJIMA, Tetsuya**
**Tokyo 100-8310 (JP)**

(74) Representative: **Meissner Bolte Partnerschaft
mbB**
**Patentanwälte Rechtsanwälte**
**Postfach 86 06 24**
**81633 München (DE)**

(54) **POWER CONVERSION DEVICE AND CONTROL METHOD FOR POWER CONVERSION DEVICE**

(57)     A power conversion device (1A) that supplies power to a multiphase load based on a first command value that is a sinusoidal phase voltage command value includes: a multiphase inverter circuit (3) in which legs including two series-connected semiconductor switching elements having reverse conduction functions are connected in parallel between positive and negative terminals of a DC power supply, the number of the legs being equal to the number of phases, and a terminal between the two semiconductor switching elements in each leg is connected to each phase of the load; a modulation voltage generator (6A) that generates a second command value that is a phase voltage command value for modulation, the second command vale including a fundamental wave component of the first command value and a harmonic component including at least one sine wave having a frequency that is an odd multiple of the fundamental wave component; a carrier signal generator (7A) that generates a carrier signal of a triangular wave having a frequency that is an odd multiple of the fundamental wave component of the first command value, the triangle wave having a median value synchronized with a phase zero of the fundamental wave component of the first command value; and a gate signal generator (8) that generates a gate signal for driving the semiconductor switching elements in accordance with a result of comparison between the second command value and the carrier signal.

FIG.1

**Description**

Field

The present disclosure relates to a power conversion device that converts DC power into AC power, and a method for controlling the power conversion device.

Background

Inverters are widely used as power conversion devices that convert DC power into AC power. An inverter compares a sinusoidal modulation signal with a triangular carrier signal, turns on and off semiconductor switching elements, and outputs a sinusoidal phase voltage. However, harmonics are generated in the phase voltage by switching. For example, given that the frequency of the phase voltage is $f_s$ and the frequency of the carrier signal is $f_c$, harmonics of a frequency component A having a frequency of $f_c \pm 2f_s$ and a frequency component B having a frequency of $f_c \pm 4f_s$ are generated in the phase voltage. Harmonics increase load losses and cause noise and torque pulsation.

In the technique disclosed in Patent Literature 1, a harmonic component is superimposed on a sinusoidal modulation signal to disperse a ratio between the frequency component A and the frequency component B included in the phase voltage. Patent Literature 1 describes that load loss can be reduced by dispersing the ratio between the frequency component A and the frequency component B included in the phase voltage.

Citation List

Patent Literature

Patent Literature 1: Japanese Patent Application Laid-open No. 2014-072935

Summary of Invention

Problem to be solved by the Invention

However, according to the above-described related-art technique, when the frequency of the noise or the torque pulsation generated by the frequency component A is the same as the frequency of the noise or the torque pulsation generated by the frequency component B, there is a problem that the noise and the torque pulsation cannot be reduced by dispersing the ratio between the frequency component A and the frequency component B.

For example, given that the number of phases of the inverter is three and $f_c = 9f_s$, the frequency of the frequency component A is $7f_s$ and $11f_s$, and the frequency of the frequency component B is $5f_s$ and $13f_s$. Considering the frequency of the noise and the torque pulsation generated by the frequency component A, it is $6f_s$ since $7f_s$ is a positive phase component, and is $12f_s$ since $11f_s$ is a negative phase component. Similarly, considering the frequency of the noise and the torque pulsation generated by the frequency component B, it is $6f_s$ since $5f_s$ is a positive phase component, and is $12f_s$ since $13f_s$ is a negative phase component. That is, in the above case, even if the ratio between the frequency component A and the frequency component B is dispersed, noise and torque pulsation of frequencies common to both components are generated, and thus, it is not possible to reduce the noise and the torque pulsation.

The present disclosure has been made in view of the above, and an object thereof is to obtain a power conversion device capable of effectively reducing noise and torque pulsation generated by switching of an inverter and reducing a loss of a load due to harmonic components.

Means to Solve the Problem

To solve the problem and achieve the object, the present disclosure provides a power conversion device to supply power to a multiphase load based on a first command value, the first command value being a sinusoidal phase voltage command value, the power conversion device comprising: a multiphase inverter circuit in which legs each including two series-connected semiconductor switching elements having reverse conduction functions are connected in parallel between positive and negative terminals of a DC power supply, the number of the legs being equal to the number of phases, and a terminal between the two semiconductor switching elements in each of the plurality of legs is connected to each phase of the load; a modulation voltage generator to generate a second command value, the second command value being a phase voltage command value for modulation and including a fundamental wave component of the first command value and a harmonic component including at least one sine wave having a frequency that is an odd multiple of the fundamental wave component; a carrier signal generator to generate a carrier signal of a triangular wave having a frequency that is an odd multiple of the fundamental wave component of the first command value, the triangular wave having a median value synchronized with a phase zero of the fundamental wave component of the first command value; and a gate signal generator to generate a gate signal for driving the semiconductor switching elements in accordance with a result of comparison between the second command value and the carrier signal.

Effects of the Invention

The present disclosure can achieve the effect of effectively reducing noise and torque pulsation generated by switching of an inverter and reducing a loss of a load due to harmonic components.

Brief Description of Drawings

FIG. 1 is a diagram illustrating a configuration of a power conversion device according to the first embodiment.
FIG. 2 is a diagram illustrating a configuration of the carrier signal generator illustrated in FIG. 1.
FIG. 3 is a diagram illustrating a carrier signal generated by the carrier signal calculator illustrated in FIG. 2.
FIG. 4 is a diagram illustrating an example of the carrier signal c generated by the carrier signal calculator illustrated in FIG. 2.
FIG. 5 is a diagram for explaining the operation of the gate signal generator illustrated in FIG. 1.
FIG. 6 is a diagram illustrating an example of the phase voltage output from the power conversion device when the sinusoidal second command value is provided to the gate signal generator.
FIG. 7 is a diagram illustrating a configuration of the modulation voltage generator illustrated in FIG. 1.
FIG. 8 is a diagram illustrating waveforms of the second command values, the carrier signal, and the output phase voltage according to the first embodiment.
FIG. 9 is a diagram illustrating waveforms of the phase voltage command value, the carrier signal, and the output phase voltage according to a comparative example of the first embodiment.
FIG. 10 is a diagram illustrating the WTHD of the power conversion device according to the first embodiment.
FIG. 11 is a diagram illustrating WTHD in a comparative example of the first embodiment.
FIG. 12 is a diagram illustrating the magnitude of harmonic components included in the output phase voltage of the power conversion device according to the first embodiment.
FIG. 13 is a diagram illustrating the magnitude of harmonic components included in the output phase voltage in a comparative example of the first embodiment.
FIG. 14 is a diagram illustrating a configuration of a power conversion device according to the second embodiment.
FIG. 15 is a diagram illustrating a configuration of the modulation voltage generator illustrated in FIG. 14.
FIG. 16 is a diagram illustrating a configuration of a power conversion device according to the third embodiment.
FIG. 17 is a diagram illustrating a configuration of the carrier signal generator illustrated in FIG. 16.
FIG. 18 is a diagram illustrating a configuration of the modulation voltage generator illustrated in FIG. 16.
FIG. 19 is a diagram illustrating waveforms of the second command values, the carrier signal c, and the output phase voltage according to the third embodiment.
FIG. 20 is a diagram illustrating waveforms of the phase voltage command value, the carrier signal, and the output phase voltage according to a comparative example of the third embodiment.
FIG. 21 is a diagram illustrating the WTHD of the power conversion device according to the third embodiment.
FIG. 22 is a diagram illustrating the WTHD in a comparative example of the third embodiment.
FIG. 23 is a diagram illustrating the magnitude of harmonic components included in the output phase voltage of the power conversion device according to the third embodiment.
FIG. 24 is a diagram illustrating the magnitude of harmonic components included in the output phase voltage in a comparative example of the third embodiment.
FIG. 25 is a diagram illustrating an exemplary configuration of the power conversion device using dedicated hardware.
FIG. 26 is a diagram illustrating an exemplary configuration of the power conversion device using a processor and a storage device.

Description of Embodiments

Hereinafter, a power conversion device and a method for controlling the power conversion device according to embodiments of the present disclosure will be described in detail with reference to the drawings.

EP 4 661 275 A1

First Embodiment.

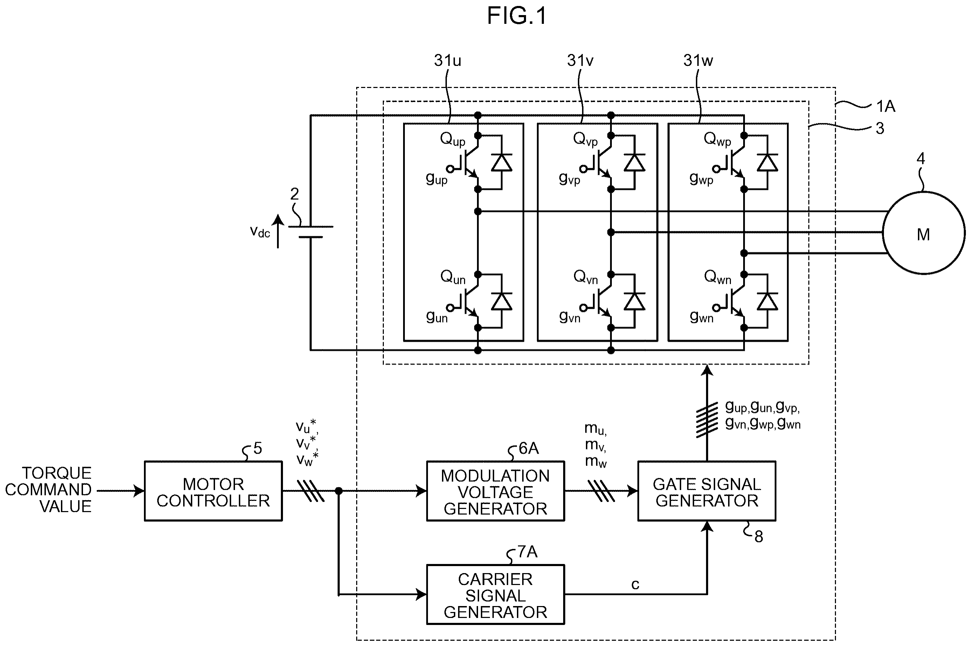

FIG. 1 is a diagram illustrating a configuration of a power conversion device 1A according to the first embodiment. The power conversion device 1A includes a multiphase inverter circuit 3 connected to each of a DC power supply 2 and a motor 4 as a load, a modulation voltage generator 6A, a carrier signal generator 7A, and a gate signal generator 8.

The multiphase inverter circuit 3 converts DC power of the DC power supply 2 into multiphase AC power and outputs the multiphase AC power to the motor 4. Here, the number of phases of the multiphase inverter circuit 3 is three, which are a u phase, a v phase, and a w phase. The multiphase inverter circuit 3 includes legs 31 each including two series-connected semiconductor switching elements Q having reverse conduction functions, the legs 31 being connected in parallel, the number of the legs 31 being equal to the number of phases. Since the number of phases of the multiphase inverter circuit 3 is three, the multiphase inverter circuit 3 includes six semiconductor switching elements Q, and as illustrated in FIG. 1, the six semiconductor switching elements Q are referred to as semiconductor switching elements $Q_{up}$, $Q_{un}$, $Q_{vp}$, $Q_{vn}$, $Q_{wp}$, and $Q_{wn}$. A series connection of the positive semiconductor switching element $Q_{up}$ and the negative semiconductor switching element $Q_{un}$ corresponding to the u phase is referred to as a leg 31u, a series connection of the positive semiconductor switching element $Q_{vp}$ and the negative semiconductor switching element $Q_{vn}$ corresponding to the v phase is referred to as a leg 31v, and a series connection of the positive semiconductor switching element $Q_{wp}$ and the negative semiconductor switching element $Q_{wn}$ corresponding to the w phase is referred to as a leg 31w. An intermediate terminal of each leg 31 is connected to the corresponding phase of the motor 4. Here, each semiconductor switching element Q is configured by an insulated gate bipolar transistor (IGBT) and an anti-parallel diode. If a metal-oxide-semiconductor fieldeffect transistor (MOSFET), a reverse conducting (RC)-IGBT, or the like is used instead of the IGBT, the anti-parallel diode may be omitted.

A motor controller 5 calculates first command values $v_u{}^*$, $v_v{}^*$, and $v_w{}^*$, which are sinusoidal phase voltage command values, as voltages to be supplied to the motor 4 from the torque command value of the motor 4. The motor controller 5 outputs the calculated first command values $v_u{}^*$, $v_v{}^*$, and $v_w{}^*$ to the modulation voltage generator 6A and the carrier signal generator 7A.

The modulation voltage generator 6A generates second command values $m_u$, $m_v$, and $m_w$, which are phase voltage command values for modulation, based on the first command values $v_u{}^*$, $v_v{}^*$, and $v_w{}^*$. The modulation voltage generator 6A outputs the generated second command values $m_u$, $m_v$, and $m_w$ to the gate signal generator 8. In addition, the carrier signal generator 7A generates a triangular wave carrier signal c based on the first command values $v_u{}^*$, $v_v{}^*$, and $v_w{}^*$. The carrier signal generator 7A outputs the generated carrier signal c to the gate signal generator 8. The gate signal generator 8 compares the magnitudes of the second command values $m_u$, $m_v$, and $m_w$ with the magnitude of the carrier signal c to generate gate signals $g_{up}$, $g_{un}$, $g_{vp}$, $g_{vn}$, $g_{wp}$, and $g_{wn}$ for controlling on and off of the semiconductor switching element Q of the multiphase inverter circuit 3. The gate signals $g_{up}$, $g_{un}$, $g_{vp}$, $g_{vn}$, $g_{wp}$, and $g_{wn}$ respectively correspond to the semiconductor switching elements $Q_{up}$, $Q_{un}$, $Q_{vp}$, $Q_{vn}$, $Q_{wp}$, and $Q_{wn}$, and turn on or off the corresponding semiconductor switching elements Q. Note that the gate signals $g_{up}$, $g_{un}$, $g_{vp}$, $g_{vn}$, $g_{wp}$, and $g_{wn}$ are simply referred to as gate signals g when not distinguished from one another.

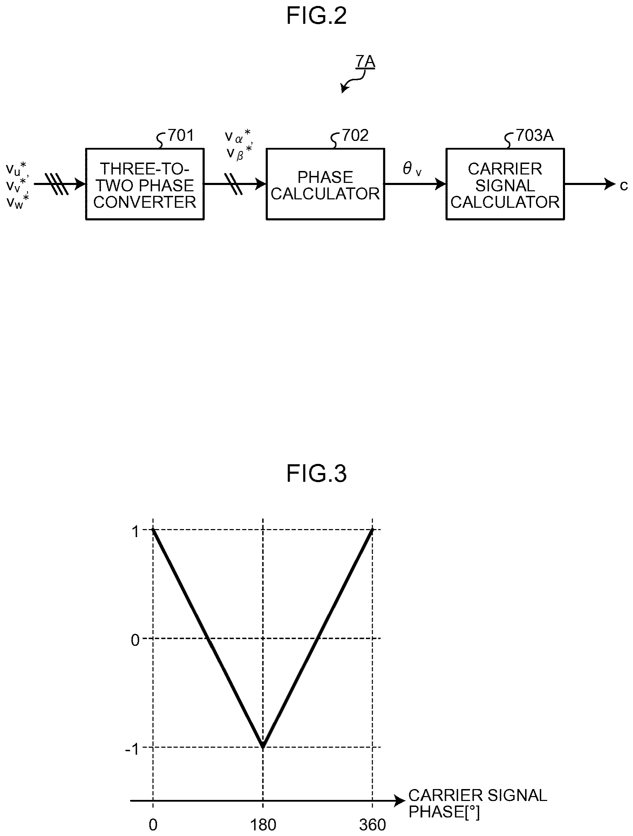

FIG. 2 is a diagram illustrating a configuration of the carrier signal generator 7A illustrated in FIG. 1. The carrier signal generator 7A includes a three-to-two phase converter 701, a phase calculator 702, and a carrier signal calculator 703A.

The three-to-two phase converter 701 performs three-to-two phase conversion on the first command values $v_u{}^*$, $v_v{}^*$, and $v_w{}^*$ on the three-phase coordinates into first command values $v_\alpha{}^*$ and $v_\beta{}^*$ on the two-phase coordinates. The three-to-two phase converter 701 can perform three-to-two phase conversion using, for example, Formula (1) below. Formula 1:

$$\begin{bmatrix} v_\alpha^* \\ v_\beta^* \end{bmatrix} = \sqrt{\frac{2}{3}} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} v_u^* \\ v_v^* \\ v_w^* \end{bmatrix} \qquad \cdots (1)$$

The phase calculator 702 calculates a fundamental wave phase $\theta_v$ of the u-phase of the first command values $v_\alpha{}^*$ and $v_\beta{}^*$ on the two-phase coordinates. Specifically, first, an arc tangent calculation is performed on the first command values $v_\alpha{}^*$ and $v_\beta{}^*$ on the two-phase coordinates to obtain the phase of $v_\alpha{}^*$. This phase is the same as the phase of $v_u{}^*$. However, since the phase of $v_\alpha{}^*$ obtained by performing the arc tangent calculation on the first command values $v_\alpha{}^*$ and $v_\beta{}^*$ on the two-phase coordinates is based on the cos signal, the phase based on the sin signal can be obtained by subtracting "$\pi/2$" from this phase.

Here, the first command values $v_u{}^*$, $v_v{}^*$, and $v_w{}^*$ and the first command values $v_\alpha{}^*$ and $v_\beta{}^*$ are described on the assumption that the first command values $v_u{}^*$, $v_v{}^*$, and $v_w{}^*$ have waveforms with sufficiently few harmonic components and are the same as the fundamental wave components. When the response of the motor controller 5 is fast and many harmonic components are included in the first command values $v_u{}^*$, $v_v{}^*$, and $v_w{}^*$ and the first command values $v_\alpha{}^*$ and $v_\beta{}^*$, the fundamental wave component can be extracted by passing through a low-pass filter or the like.

The carrier signal calculator 703A first calculates a carrier signal c having a frequency of an odd number Kc times the fundamental wave component. Specifically, the phase of the carrier signal is generated by multiplying the fundamental wave phase θv by the odd number Kc. Then, the carrier signal calculator 703A generates a triangular wave carrier signal c as illustrated in FIG. 3. FIG. 3 is a diagram illustrating a carrier signal generated by the carrier signal calculator 703A illustrated in FIG. 2. Further, the carrier signal calculator 703A performs phase synchronization control of correcting the phase of the carrier signal c so that the median value of the triangular wave overlaps the phase of 0° of the phase voltage command value. In the example illustrated in FIG. 3, the median value of the triangle wave is zero. The carrier signal calculator 703A outputs the carrier signal c subjected to the phase synchronization control to the gate signal generator 8.

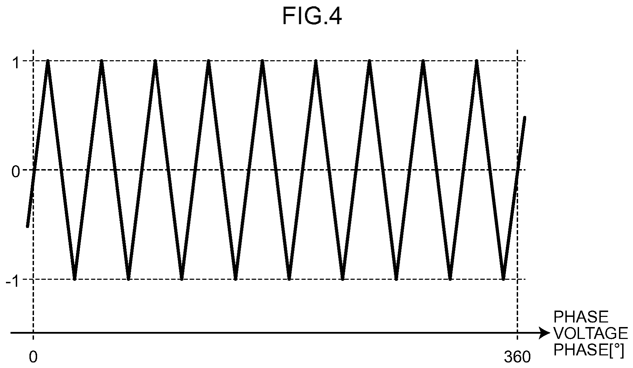

In the present embodiment, the odd number Kc is set to nine, and the phase of 270° of the carrier signal c is synchronized with the phase of 0° of the phase voltage command value. At this time, the carrier signal is as illustrated in FIG. 4. FIG. 4 is a diagram illustrating an example of the carrier signal c generated by the carrier signal calculator 703A illustrated in FIG. 2. In the present embodiment, the carrier signal c is synchronized with the phase of the u-phase voltage, and the carrier signal c common to the three phases is used. Therefore, the odd number Kc for determining the frequency of the carrier signal c is set to a multiple of three, the number of phases.

Returning to FIG. 1, the gate signal generator 8 compares each of the second command values $m_u$, $m_u$, and $m_w$, which are phase voltage command values for modulation output from the modulation voltage generator 6A, with the carrier signal c, and generates the gate signals $g_{up}$, $g_{un}$, $g_{vp}$, $g_{un}$, $g_{wp}$, and $g_{wn}$ for controlling on and off of the semiconductor switching elements $Q_{up}$, $Q_{un}$, $Q_{vp}$, $Q_{vn}$, $Q_{wp}$, and $Q_{wn}$ of the multiphase inverter circuit 3. Each of the gate signals $g_{up}$, $g_{un}$, $g_{vp}$, $g_{vn}$, $g_{wp}$, and $g_{wn}$ takes a value of high "H" or low "L". When the value of the gate signal g is "H", the semiconductor switching element Q corresponding to the gate signal g is controlled to be turned on, and when the value of the gate signal g is "L", the semiconductor switching element Q corresponding to the gate signal g is controlled to be turned off.

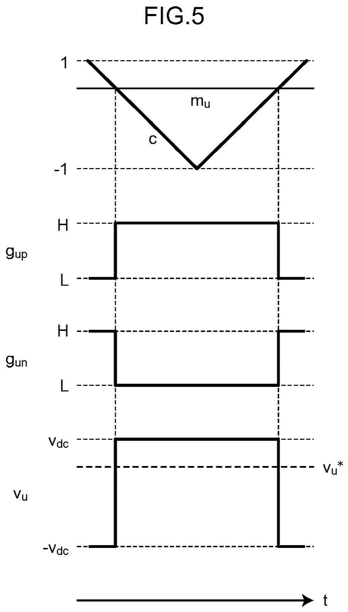

FIG. 5 is a diagram for explaining the operation of the gate signal generator 8 illustrated in FIG. 1. FIG. 5 illustrates the u-phase component. The gate signal generator 8 compares the second command value $m_u$ with the carrier signal c to generate the gate signals $g_{up}$ and $g_{un}$. Specifically, here, when the second command value $m_u$ is larger than the carrier signal c, the value of the gate signal $g_{up}$ is "H" and the value of the gate signal $g_{un}$ is "L", and when the second command value $m_u$ is smaller than the carrier signal c, the value of the gate signal $g_{up}$ is "L" and the value of the gate signal $g_{un}$ is "H". The gate signals $g_{up}$ and $g_{un}$ are complementary to each other. That is, when the gate signal $g_{up}$ is "H", the gate signal $g_{un}$ is "L", and when the gate signal $g_{up}$ is "L", the gate signal $g_{un}$ is "H". When the gate signal $g_{up}$ is "H", the positive-side semiconductor switching element $Q_{up}$ is turned on and the output phase voltage $v_u$ is $v_{dc}/2$, and when the gate signal $g_{un}$ is "H", the negative-side semiconductor switching element $Q_{un}$ is turned on and the output voltage $v_u$ is $-v_{dc}/2$. By averaging the output phase voltage $v_u$ by the cycle of the carrier signal c, a phase voltage according to the first command value $v_u{}^*$ is obtained.

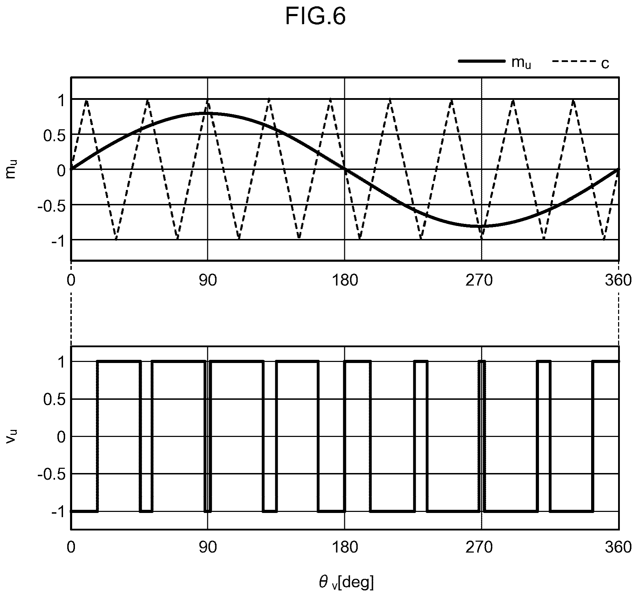

Here, consider the second command values $m_u$, $m_v$, and $m_w$ generated by the modulation voltage generator 6A by considering harmonic components assumed to be generated when the carrier signal c generated by the carrier signal generator 7A and the gate signal generator 8 described above are used. FIG. 6 is a diagram illustrating an example of the phase voltage output from the power conversion device 1A when the sinusoidal second command value $m_u$ is provided to the gate signal generator 8. FIG. 6 illustrates, for the u-phase, the waveform of the phase voltage output when the multiphase inverter circuit 3 is operated by generating the gate signal g from the second command values $m_u$, $m_v$, and $m_w$, which are sinusoidal phase voltage command values for modulation, using the carrier signal c and the gate signal generator 8. The upper part of FIG. 6 illustrates the sinusoidal second command value $m_u$ and the triangular wave carrier signal c, and the lower part of FIG. 6 illustrates the output phase voltage $v_u$ output based on the sinusoidal second command value $m_u$ and the triangular wave carrier signal c. The waveform of the output phase voltage $v_u$ output from the power conversion device 1A is expressed by the sum of sine wave components and cosine wave components of various orders based on the idea of Fourier series expansion. Here, since the phase voltage is positively and negatively symmetric in the phases of 0° to 180° and phases of 180° to 360°, even-order harmonic components are first removed. Next, the phase voltage is inverted between phases of 0° to 90° and phases of 90° to 180°, and the cosine wave component is also removed. Therefore, when the carrier signal c of the present embodiment is used, the harmonic component of the phase voltage is only the odd-order sine wave component. Further, based on this result, optimization of the phase voltage waveform by superimposing harmonic components on the first command values $v_u{}^*$, $v_v{}^*$, and $v_w{}^*$ or the second command values $m_u$, $m_v$, and $m_w$ can be performed simply by superimposing odd-order sine wave components on the first command values $v_u{}^*$, $v_v{}^*$, and $v_w{}^*$ or the second command values $m_u$, $m_v$, and $m_w$.

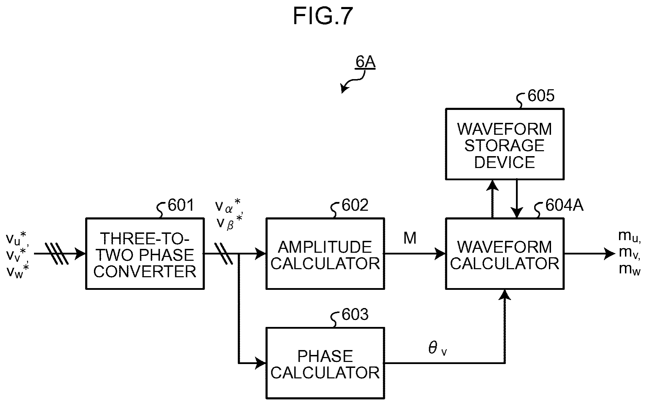

FIG. 7 is a diagram illustrating a configuration of the modulation voltage generator 6A illustrated in FIG. 1. The modulation voltage generator 6A includes a three-to-two phase converter 601, an amplitude calculator 602, a phase calculator 603, a waveform calculator 604A, and a waveform storage device 605.

The three-to-two phase converter 601 performs three-to-two phase conversion on the first command values $v_u^*$, $v_v^*$, and $v_w^*$, which are sinusoidal phase voltage command values on the three-phase coordinates, into the first command values $v_\alpha^*$ and $v_\beta^*$ on the two-phase coordinates by processing similar to that of the three-to-two phase converter 701. The three-to-two phase converter 601 outputs the first command values $v_a^*$ and $v_\beta^*$ on the two-phase coordinates to the amplitude calculator 602 and the phase calculator 603.

The amplitude calculator 602 first calculates the amplitudes $v_{php}$ of the first command values $v_\alpha^*$ and $v_\beta^*$ from the first command values $v_\alpha^*$ and $v_\beta^*$ on the two-phase coordinates. For example, the amplitude calculator 602 can calculate the amplitude $v_{php}$ of the first command values $v_\alpha^*$ and $v_\beta^*$ using Formula (2) below.
Formula 2:

$$v_{\mathrm{php}} = \sqrt{\frac{2}{3}} \sqrt{v_\alpha^{*2} + v_\beta^{*2}} \qquad \cdots (2)$$

Next, as shown in Formula (3) below, the amplitude calculator 602 divides the amplitude $v_{php}$ of the calculated first command values $v_\alpha^*$ and $v_\beta^*$ by 1/2 of the DC voltage to convert it into the amplitude M of the second command values $m_u$, $m_v$, and $m_w$ which are voltage command values for modulation. The amplitude calculator 602 outputs the amplitude M, which is the calculation result, to the waveform calculator 604A.
Formula 3:

$$M = \frac{v_{\mathrm{php}}}{v_{\mathrm{dc}}/2} \qquad \cdots (3)$$

The phase calculator 603 calculates the u-phase fundamental wave phase $\theta_v$ of the first command values $v_\alpha^*$ and $v_\beta^*$ on the two-phase coordinates by processing similar to that of the phase calculator 702. The phase calculator 603 outputs the fundamental wave phase $\theta_v$, which is the calculation result, to the waveform calculator 604A.

The waveform calculator 604A calculates the waveforms of the second command values $m_u$, $m_v$, and $m_w$ using the amplitude M and the u-phase fundamental wave phase $\theta_v$. Specifically, the waveforms of the second command values $m_u$, $m_v$, and $m_w$ corresponding to 1/4 cycles of the phases of 0° to 90° of the fundamental waves of the first command values $v_u^*$, $v_v^*$, and $v_w^*$ are stored in advance in the waveform storage device 605, and the second command values $m_u$, $m_v$, and $m_w$ are generated using the stored waveforms. Here, the waveform calculator 604A reproduces the waveform of one period of the fundamental wave from the waveform corresponding to 1/4 cycles of the fundamental wave using the phase voltage, that is, the second command values $m_u$, $m_v$, and $m_w$, which are positively and negatively symmetric in the phases of 0° to 180° and 180° to 360° and inverted symmetric in the phases of 0° to 90° and 90° to 180°. Since the waveforms of the three-phase modulation phase voltage command values are waveforms whose phases are shifted from each other by 120°, the waveform calculator 604A can generate the u-phase waveform using the u-phase fundamental wave phase $\theta_v$ and then shift the phases to generate the three-phase second command values $m_u$, $m_v$, and $m_w$.

The waveforms of the second command values $m_u$, $m_v$, and $m_w$ stored in the waveform storage device 605 are generated such that, when the carrier signal c generated by the carrier signal generator 7A is used in the present embodiment, the fundamental wave component of the phase voltage matches the command value and the harmonic component is optimized. Here, in the present embodiment, the optimal second command values $m_u$, $m_v$, and $m_w$ can be obtained with a simple method in which only odd-order sine wave components as harmonic components are superimposed on the fundamental wave components of the first command values $v_u^*$, $v_v^*$, and $v_w^*$.

As a method of superimposing a harmonic component on a phase voltage command value, WO 2019/016901 A discloses a method of superimposing a third harmonic for a three-phase inverter circuit. In this method, by superimposing harmonics whose frequency is an integral multiple of the number of phases, a larger AC voltage can be supplied to the load effectively using the voltage on the DC side without changing the output voltage on the load side of the multiphase inverter circuit 3. On the other hand, in the present embodiment, a harmonic component whose frequency is not an integral multiple of the number of phases, that is, a sine wave, is also superimposed on the phase voltage command value. As a result, the frequency distribution of the harmonic components generated by the switching of the multiphase inverter circuit 3 can be optimized.

In addition, in the present embodiment, the second command values $m_u$, $m_v$, and $m_w$ are constant values in the carrier half cycle that is a period in which the carrier signal c changes from the minimum value to the maximum value or a period in which the carrier signal c changes from the maximum value to the minimum value. In the present embodiment, since the odd number Kc is set to nine, the fundamental wave 1/4 cycle stored in the waveform storage device 605 corresponds to 4.5 times the carrier half cycle, but in order to maintain the symmetry of the phase voltage waveform, the

second command values $m_u$, $m_v$, and $m_w$ are set to zero in the first 0.5 cycles. Therefore, in the present embodiment, it is sufficient to optimize and store only four values corresponding to four sections of the carrier half cycle, and the optimization is easy.

Note that, although the waveforms for the fundamental wave 1/4 cycle of the second command values $m_u$, $m_v$, and $m_w$ for one phase are stored here, in a case where waveforms for a plurality of phases are stored, the storage period can be reduced. When the number of phases is three, the phase of the v-phase voltage is -120° to -90°, that is, 240° to 270° during a period in which the phase of the u-phase voltage is 0° to 30°. This waveform is obtained by positive and negative inversion of the waveform in the period of 60° to 90° of the u-phase voltage in consideration of the symmetry of the waveform. Next, during the period in which the phase of the u-phase voltage is 0° to 30°, the phase of the w-phase voltage is -240° to -210°, that is, 120° to 150°. In consideration of the symmetry of the waveform, this waveform is obtained by inverting the waveform in the period of 30° to 60° of the u-phase voltage in the time direction, that is, the phase direction. Therefore, in a case where the waveforms of the second command values $m_u$, $m_v$, and $m_w$ for the three phases are stored, if the waveforms for the period of the phase of 0° to 30° are stored, the waveforms for the period of 0° to 90° can be reproduced. That is, the waveforms of the second command values $m_u$, $m_v$, and $m_w$ for multiple phases can be stored simply by storing the waveforms for a period obtained by dividing a period of 90°, which is the fundamental wave 1/4 cycle, by the number of phases.

In the present embodiment, the harmonic component of the phase voltage is optimized so as to minimize an objective function $f_{obj}$ expressed by Formula (4) below.

Formula 4:

$$f_{obj} = \sqrt{\sum_{i=1}^{8} \left\{ \left( k_{6i-1} \frac{v_{6i-1}}{6i-1} \right)^2 + \left( k_{6i+1} \frac{v_{6i+1}}{6i+1} \right)^2 \right\}} \qquad \cdots (4)$$

Here, the harmonic component is optimized so that the square root of the sum of squares of the value obtained by dividing the n-th harmonic voltage vn by the order n, that is, the effective current value of the load, is minimized. Here, n=6i ±1. However, it is assumed that specific frequency components, here, fifth and seventh harmonic components, excite mechanical resonance of a load to cause large noise and torque pulsation, and weighting of these order components is increased to preferentially reduce the frequency components. That is, as expressed by Formula (5) below, the weight $k_n$ in Formula (4) is larger when n is five and when n is seven than when n is other than five and seven. This makes it possible to reduce load loss while reducing noise and torque pulsation.

Formula 5:

$$k_n = \begin{cases} 1 & (n \neq 5, 7) \\ 10 & (n = 5, 7) \end{cases} \qquad \cdots (5)$$

In the present embodiment, the number of phases of the multiphase inverter circuit 3 and the motor 4 is set to three, and the three-phase waveforms are waveforms whose phases are shifted from each other by 120°, so that a harmonic component of a multiple of three is not generated. Furthermore, since the voltage waveform of each phase is positively and negatively symmetric in the phases of 0° to 180° and the phases of 180° to 360°, a harmonic component of a multiple of two is also not generated. In the optimization, harmonic components are considered up to the 50th order.

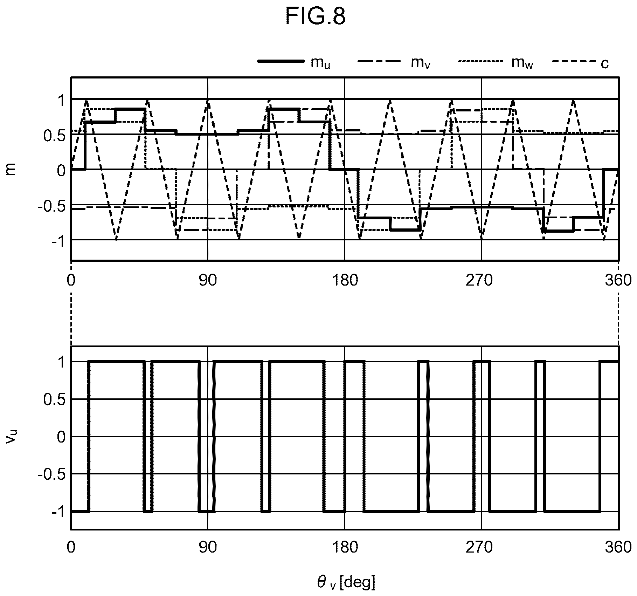

FIG. 8 is a diagram illustrating waveforms of the second command values $m_u$, $m_v$, and $m_w$, the carrier signal c, and the output phase voltage $v_u$ according to the first embodiment. FIG. 8 illustrates a case where the amplitude M=0.8. The second command values $m_u$, $m_v$, and $m_w$ include fundamental wave components of the first command values $v_u^*$, $v_v^*$, and $v_w^*$ and harmonic components including odd-order sine wave components. Here, the harmonic component includes a sine wave component whose frequency is not an integral multiple of the number of phases. Specifically, sine wave components having frequencies that are 3 times, 5 times, 7 times, 11 times, 13 times, 15 times, 17 times, 19 times, and 21 times the fundamental wave component are superimposed on the second command values $m_u$, $m_v$, and $m_w$. Although the sine wave components having frequencies up to 21 times the fundamental wave component are described here, a sine wave component having a higher frequency is superimposed on the second command values $m_u$, $m_v$, and $m_w$. The output phase voltage $v_u$ of the u phase is positively and negatively symmetric in the phases of 0° to 180° and phases of 180° to 360°, and is inversely symmetric in the phases of 0° to 90° and phases of 90° to 180°. In addition, the second command values $m_u$, $m_v$, and $m_w$ are constant values in the carrier half cycle.

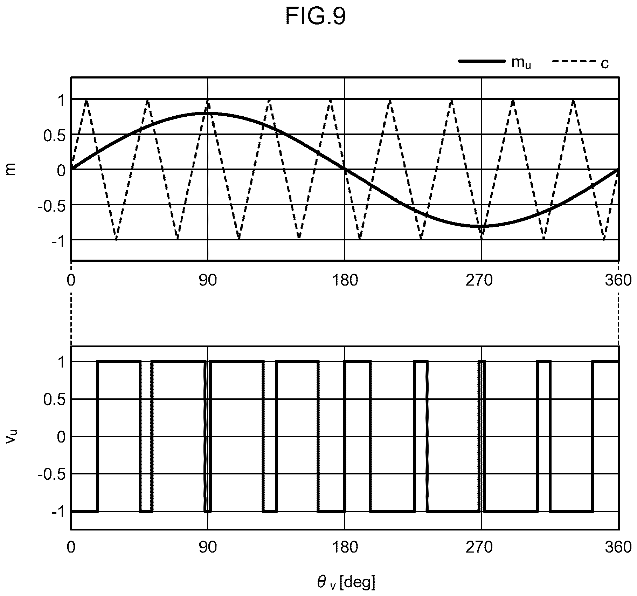

Here, in order to describe the effect of the power conversion device 1A according to the present embodiment, a comparative example using general carrier synchronization pulse width modulation (PWM) will be described. FIG. 9 is a diagram illustrating waveforms of the phase voltage command value, the carrier signal c, and the output phase voltage $v_u$

according to a comparative example of the first embodiment. The difference from the example of the first embodiment illustrated in FIG. 8 is that no harmonic component is superimposed on the phase voltage command value. The same carrier signal c as that in the example illustrated in FIG. 8 is used.

Here, the effective current value of the motor 4 as a load is evaluated by WTHD expressed by Formula (6) below. Formula 6:

$$WTHD = \frac{\sqrt{\sum_{n=2}^{\infty}\left(\frac{v_n}{n}\right)^2}}{v_1} \qquad \cdots (6)$$

The numerator of Formula (6) is the square root of the sum of squares of a value obtained by dividing the n-th harmonic voltage vn by its order n, that is, a value corresponding to the effective current value of the load. By dividing this effective current value by the amplitude v1 of the fundamental wave voltage of the denominator, WTHD becomes a value corresponding to the current distortion rate.

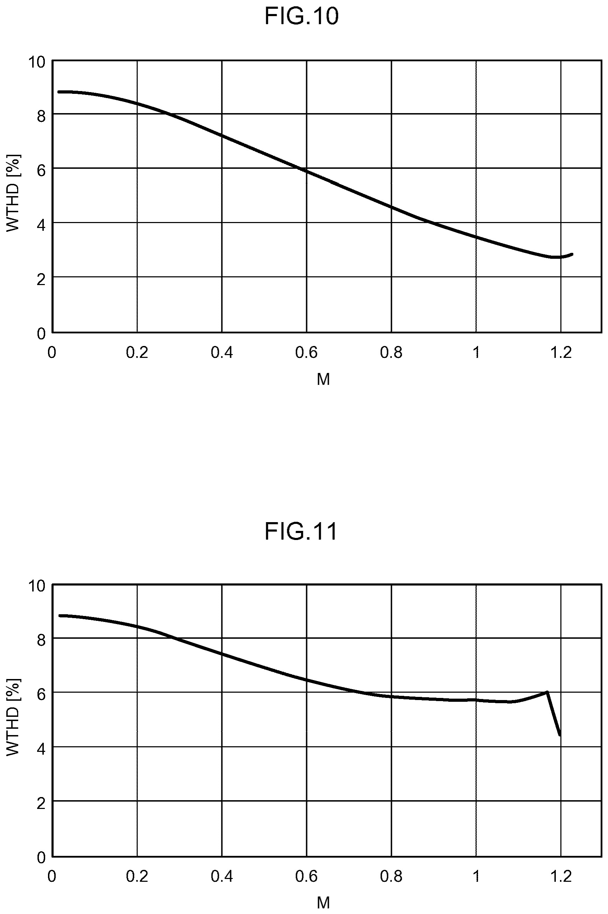

Here, the value of WTHD is compared between the power conversion device 1A according to the present embodiment and the comparative example. FIG. 10 is a diagram illustrating the WTHD of the power conversion device 1A according to the first embodiment. FIG. 11 is a diagram illustrating WTHD in a comparative example of the first embodiment. Comparing FIG. 10 with FIG. 11, it can be confirmed that WTHD can be greatly reduced particularly in a region where the amplitude M of the modulation voltage is large, and the effective current value of the load, that is, the loss can be reduced.

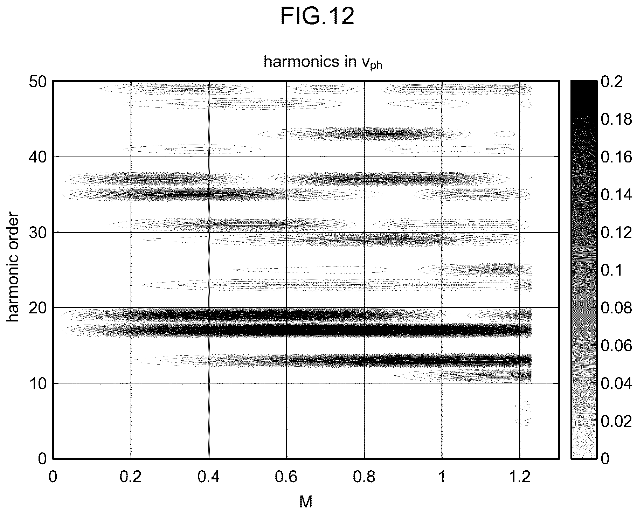

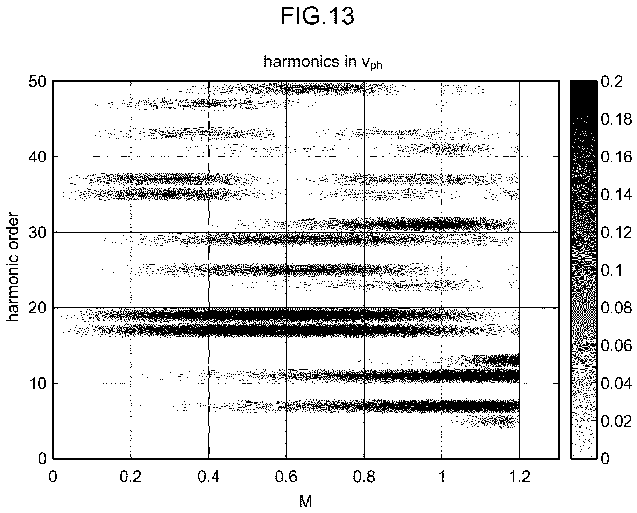

In addition, harmonic components included in the output phase voltage are compared between the power conversion device 1A according to the present embodiment and the comparative example. FIG. 12 is a diagram illustrating the magnitude of harmonic components included in the output phase voltage of the power conversion device 1A according to the first embodiment. FIG. 13 is a diagram illustrating the magnitude of harmonic components included in the output phase voltage in a comparative example of the first embodiment. In FIGS. 12 and 13, the horizontal axis represents the amplitude M, and the vertical axis represents the frequency of the harmonic wave and is expressed by the order with respect to the fundamental wave. In FIGS. 12 and 13, for the magnitude of the harmonic components, a value obtained by dividing the amplitude $v_{ph}$ of the output phase voltage by half of the DC voltage is indicated by color shading. By comparing FIGS. 12 and 13, it can be seen that in the power conversion device 1A according to the present embodiment, it is possible to greatly reduce specific frequency components assumed to excite mechanical resonance of the load to cause large noise and torque pulsation, here, the fifth and seventh harmonic components. The amplitudes of the fifth and seventh harmonic components are several percent or less of the amplitude M which is the amplitude of the fundamental wave component, and it can be confirmed that the amplitudes are almost removed.

As described above, the power conversion device 1A according to the first embodiment supplies power to the motor 4, which is a multiphase load, based on the first command values $v_u^*$, $v_v^*$, and $v_w^*$. The first command values $v_u^*$, $v_v^*$, and $v_w^*$ are sinusoidal phase voltage command values. The power conversion device 1A includes: the multiphase inverter circuit 3 in which the legs 31 including two series-connected semiconductor switching elements Q having reverse conduction functions are connected in parallel between positive and negative terminals of the DC power supply 2, the number of the legs 31 being equal to the number of phases, and a terminal between the two semiconductor switching elements Q in each of the plurality of legs 31 is connected to each phase of the motor 4 that is a load; the modulation voltage generator 6A that generates the second command values $m_u$, $m_v$, and $m_w$, the second command values $m_u$, $m_v$, and $m_w$ being phase voltage command values for modulation and including a fundamental wave component of the first command values $v_u^*$, $v_v^*$, and $v_w^*$ and a harmonic component including at least one sine wave having a frequency of an odd multiple of the fundamental wave component; the carrier signal generator 7A that generates the carrier signal c of a triangular wave having a frequency that is an odd multiple of the fundamental wave component of the first command values $v_u^*$, $v_v^*$, and $v_w^*$, the triangular wave having a median value synchronized with a phase zero of the fundamental wave component of the first command values $v_u^*$, $v_v^*$, and $v_w^*$; and the gate signal generator 8 that generates the gate signal g for driving each of the plurality of semiconductor switching elements Q of the multiphase inverter circuit 3 in accordance with a result of comparison between the second command values $m_u$, $m_v$, and $m_w$ and the carrier signal c.

Because of the feature that the carrier signal c of a triangular wave is such that the frequency is an odd multiple of the fundamental wave component of the first command values $v_u^*$, $v_v^*$, and $v_w^*$ and the median value of the triangular wave is synchronized with the phase zero of the fundamental wave component of the first command values $v_u^*$, $v_v^*$, and $v_w^*$, when the multiphase inverter circuit 3 is driven by the gate signal g generated using the carrier signal c, the generated phase voltage is positively and negatively symmetric in the phases of 0° to 180° and the phases of 180° to 360°, and is inversely symmetric in the phases of 0° to 90° and the phases of 90° to 180°. Therefore, the phase voltage does not include an even-order harmonic component or a cosine component, and the harmonic component included in the phase voltage is only the odd-order sine wave component. Therefore, by configuring the second command values $m_u$, $m_v$, and $m_w$ with the fundamental wave components of the first command values $v_u^*$, $v_v^*$, and $v_w^*$ and the harmonic components including at least one sine wave having a frequency of an odd multiple of the fundamental wave component, it is possible to reduce the harmonic components included in the output phase voltage. The frequency distribution of harmonics generated by switching of the multiphase inverter circuit 3 can be optimized with a relatively simple configuration. As a result, it is possible to effectively reduce frequency components that generate the noise and the torque pulsation of the load and to reduce the loss of the load due to the harmonic component at the same time.

Note that the harmonic components included in the second command values $m_u$, $m_v$, and $m_w$ can include at least one sine wave having a frequency that is an odd multiple of the fundamental wave component of the first command values $v_u^*$, $v_v^*$, and $v_w^*$, and not an integer multiple of the number of phases of the multiphase inverter circuit 3.

In addition, the modulation voltage generator 6A can store the second command values $m_u$, $m_v$, and $m_w$ corresponding to 1/4 cycles of the fundamental wave components of the first command values $v_u^*$, $v_v^*$, and $v_w^*$ in the waveform storage device 605 and generate the second command values $m_u$, $m_v$, and $m_w$, using the waveform storage device 605. As described above, as the frequency of the carrier signal c is an odd multiple of the fundamental wave component of the first command values $v_u^*$, $v_v^*$, and $v_w^*$, and the median value of the triangular wave is synchronized with the phase zero of the fundamental wave component of the first command values $v_u^*$, $v_v^*$, and $v_w^*$, the generated phase voltage is positively and negatively symmetric in the phases of 0° to 180° and phases of 180° to 360°, and is inversely symmetric in the phases of 0° to 90° and phases of 90° to 180°. Therefore, as long as the second command values $m_u$, $m_v$, and $m_w$ corresponding to 1/4 cycles of the fundamental wave component are stored, it is possible to generate the second command values $m_u$, $m_v$, and $m_w$ for one cycle by using the above features.

The frequency of the carrier signal c is a multiple of the frequency of the fundamental wave component, and this multiple can be an odd number and an integer multiple of the number of phases of the multiphase inverter circuit 3. As a result, the carrier signal c can be synchronized with the phase of the phase voltage of any phase, and the carrier signal c common to multiple phases can be used.

The modulation voltage generator 6A keeps the second command values $m_u$, $m_v$, and $m_w$ constant in a carrier half cycle that is a period in which the carrier signal c changes from the minimum value to the maximum value or a period in which the carrier signal c changes from the maximum value to the minimum value. As a result, the number of values stored in the waveform storage device 605 can be reduced, and the required storage capacity can be reduced. Specifically, in the first embodiment, since Kc=9, 1/4 cycles of the fundamental wave component correspond to 4.5 times the carrier half cycle, and the second command values $m_u$, $m_v$, and $m_w$ are set to zero in the first 0.5 cycles, it is sufficient to optimize and store only the four second command values $m_u$, $m_u$, and $m_w$, and the optimization is easy.

Note that, as described above using Formula (4), in the power conversion device 1A, the second command values $m_u$, $m_v$, and $m_w$ are optimized such that the effective current value of the load is lower than that in a case where the second command values $m_u$, $m_v$, and $m_w$ do not include a harmonic component. At this time, the second command values $m_u$, $m_v$, and $m_w$ are optimized such that the amplitudes of predetermined frequency components, for example, fifth and seventh harmonic components, are lower than those in a case where the second command values $m_u$, $m_v$, and $m_w$ do not include a harmonic component by using the weighting coefficients expressed in Formula (5).

Second Embodiment.

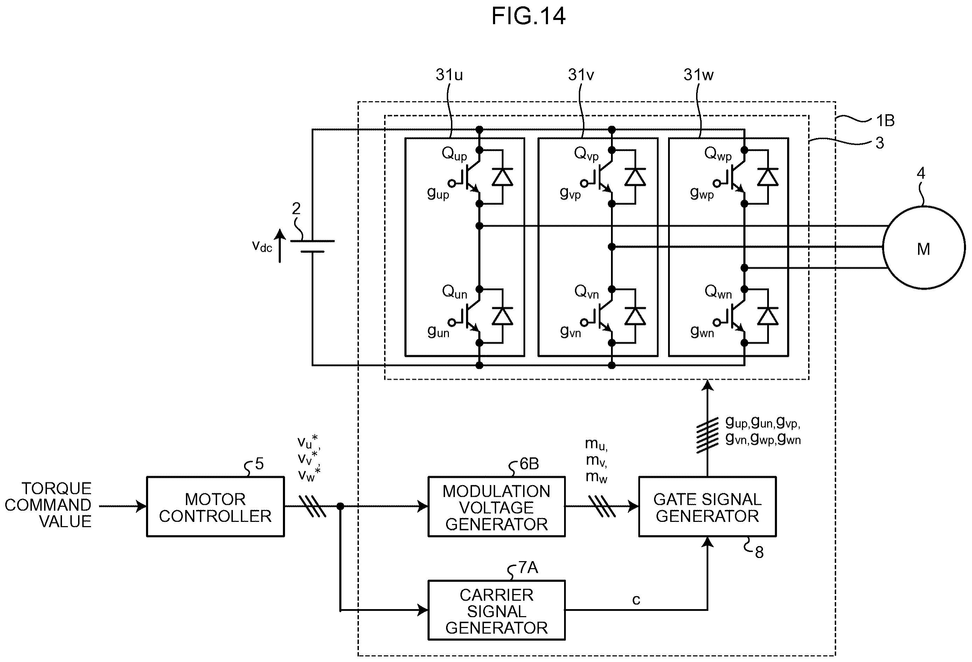

FIG. 14 is a diagram illustrating a configuration of a power conversion device 1B according to the second embodiment. The power conversion device 1B includes the multiphase inverter circuit 3, a modulation voltage generator 6B, the carrier signal generator 7A, and the gate signal generator 8. The power conversion device 1B includes the modulation voltage generator 6B instead of the modulation voltage generator 6A of the power conversion device 1A according to the first embodiment. Hereinafter, the description of parts common to the power conversion device 1A according to the first embodiment will be omitted, and differences from the power conversion device 1A will be mainly described.

In the phase synchronization control for synchronizing the carrier signal c with the phase of the phase voltage command value of the load, when the phase or frequency of the voltage to be supplied to the load changes transiently, an identification time for synchronizing the carrier signal c with the phase voltage command value is required. In the first embodiment, since the second command values $m_u$, $m_v$, and $m_w$ are generated based on the phase of the carrier signal c, while the phase of the carrier signal c is not completely synchronized with the first command values $v_u^*$, $v_v^*$, and $v_w^*$, the second command values $m_u$, $m_v$, and $m_w$, that is, the phase voltage of the load, is not synchronized with the first command value. Therefore, the modulation voltage generator 6B has a function capable of quickly generating the second command values $m_u$, $m_v$, and $m_w$ synchronized with the first command values $v_u^*$, $v_v^*$, and $v_w^*$ even when the phases and frequencies of the first command values $v_u^*$, $v_v^*$, and $v_w^*$ change transiently.

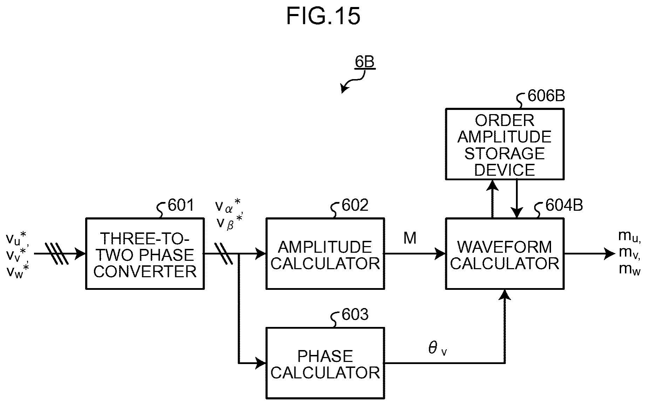

FIG. 15 is a diagram illustrating a configuration of the modulation voltage generator 6B illustrated in FIG. 14. The modulation voltage generator 6B includes the three-to-two phase converter 601, the amplitude calculator 602, the phase calculator 603, a waveform calculator 604B, and an order amplitude storage device 606B.

The modulation voltage generator 6B includes the waveform calculator 604B instead of the waveform calculator 604A of the modulation voltage generator 6A according to the first embodiment, and includes the order amplitude storage device 606B instead of the waveform storage device 605.

In the order amplitude storage device 606B, information of the optimized second command values $m_u$, $m_v$, and $m_w$ is stored in advance. Specifically, for the amplitude M, the order amplitude storage device 606B stores the amplitude $m_1$ of the fundamental wave component of the second command values $m_u$, $m_v$, and $m_w$, the amplitude of the sine wave to be included as the harmonic component, and how many times the frequency of the sine wave to be included as the harmonic component is the fundamental wave component. Here, the harmonic components have frequencies that are three times, five times, and seven times the fundamental wave component, and amplitudes of $m_3$, $m_5$, and $m_7$, respectively. Note that $m_1$, $m_3$, $m_5$, and $m_7$ are stored in association with the respective values of the amplitude M, and the amplitude of the fundamental wave component with respect to the amplitude M is $m_1(M)$, and the amplitude of the sine wave with respect to the amplitude M is $m_3(M)$, $m_5(M)$, and $m_7(M)$. Here, the harmonic component in a case where the phase of the sine wave is 180° can be reproduced by setting the amplitude to a negative value.

In the second embodiment, the second command values $m_u$, $m_v$, and $m_w$ as illustrated in FIG. 8 optimized in the same manner as in the first embodiment are used. In the first embodiment, four voltage command values for four sections of the carrier half cycle are stored in order to reproduce a waveform for 1/4 cycles of the fundamental wave component. Since the degree of freedom is four, the original optimal waveform can be reproduced by using the fundamental wave component and the harmonic components of the three frequencies.

The waveform calculator 604B calculates waveforms of the second command values $m_u$, $m_v$, and $m_w$ with respect to the amplitude M. For example, the u-phase second command value $m_u(M)$ with respect to the amplitude M can be calculated using Formula (7) below.

Formula 7:

$$m_u(M) = m_1(M) \sin \theta_v + m_3(M) \sin 3\theta_v$$
$$+ m_5(M) \sin 5\theta_v + m_7(M) \sin 7\theta_v \qquad \cdots (7)$$

Since the waveforms of the three-phase second command values $m_u$, $m_v$, and $m_w$ are waveforms in which the phases of the fundamental wave components are shifted from each other by 120°, the three-phase second command values $m_u$, $m_v$, and $m_w$ can be generated using the u-phase fundamental wave phase $\theta v$.

As described above, according to the power conversion device 1B according to the second embodiment, since the second command values $m_u$, $m_v$, and $m_w$ of the first embodiment are reproduced by function approximation, first, the same effects as those of the first embodiment can be obtained. Specifically, as in the first embodiment, it is possible to reduce the effective current value of the load, that is, the loss. In addition, it is possible to reduce and almost eliminate specific frequency components assumed to excite mechanical resonance of the load to cause large noise and torque pulsation, for example, fifth and seventh harmonic components.

In the power conversion device 1B according to the second embodiment, the modulation voltage generator 6B stores, in the order amplitude storage device 606B, i.e., a storage device, the amplitude $m_1$ of the fundamental wave component of the first command values $v_u{}^*$, $v_v{}^*$, and $v_w{}^*$, the amplitude of the sine wave included in the harmonic component, and how many times the frequency of the sine wave included in the harmonic component is the fundamental wave component in the order amplitude storage device 606B as a storage device, and generates the second command values $m_u$, $m_v$, and $m_w$, using the order amplitude storage device 606B. Therefore, even while the phase and frequency of the first command values $v_u{}^*$, $v_v{}^*$, and $v_w{}^*$ change transiently and the phase synchronization control of the carrier signal c cannot follow, the voltage according to the first command values $v_u{}^*$, $v_v{}^*$, and $v_w{}^*$ can be supplied to the load. Therefore, the voltage to be supplied to the load can be controlled with high accuracy and high response.

Note that the carrier signal generator 7A generates the carrier signal c having a frequency that is nine times the fundamental wave component, and the second command values $m_u$, $m_v$, and $m_w$ include sine waves of three frequencies as harmonic components. For example, the second command values $m_u$, $m_v$, and $m_w$ can include sine waves having frequencies that are three times, five times, and seven times the fundamental wave component as harmonic components.

As described above, the power conversion device 1B according to the second embodiment can achieve a remarkable effect that the voltage to be supplied to the load can be controlled with high accuracy and high response, in addition to the effects of the first embodiment.

Third Embodiment.

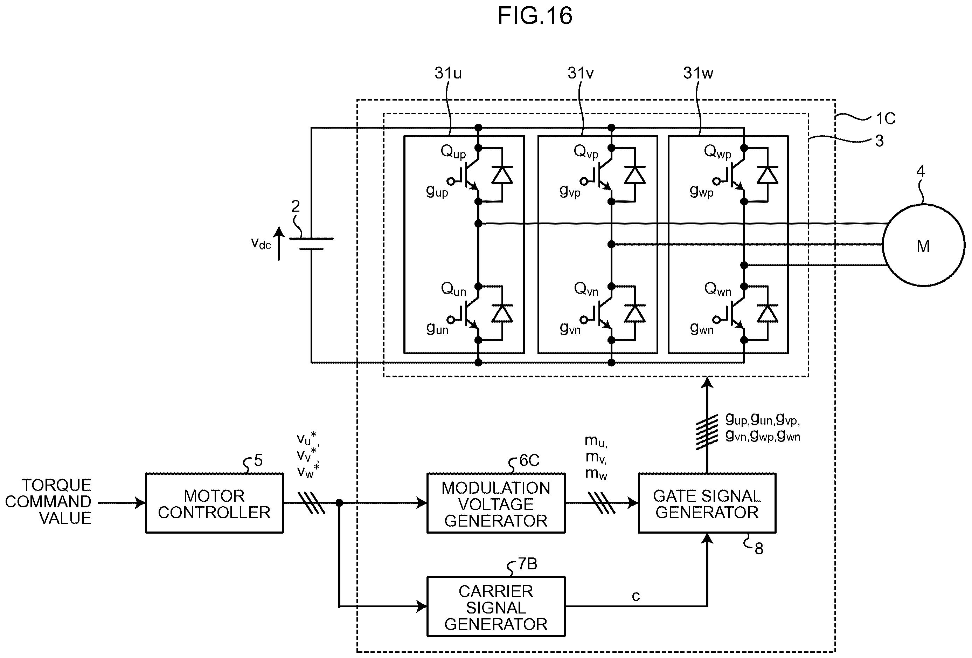

FIG. 16 is a diagram illustrating a configuration of a power conversion device 1C according to the third embodiment. The power conversion device 1C includes the multiphase inverter circuit 3, a modulation voltage generator 6C, a carrier signal generator 7B, and the gate signal generator 8. The power conversion device 1C includes the modulation voltage generator 6C instead of the modulation voltage generator 6A of the power conversion device 1A according to the first embodiment, and includes the carrier signal generator 7B instead of the carrier signal generator 7A. Hereinafter, the description of parts common to the power conversion device 1A according to the first embodiment will be omitted, and differences from the power conversion device 1A will be mainly described.

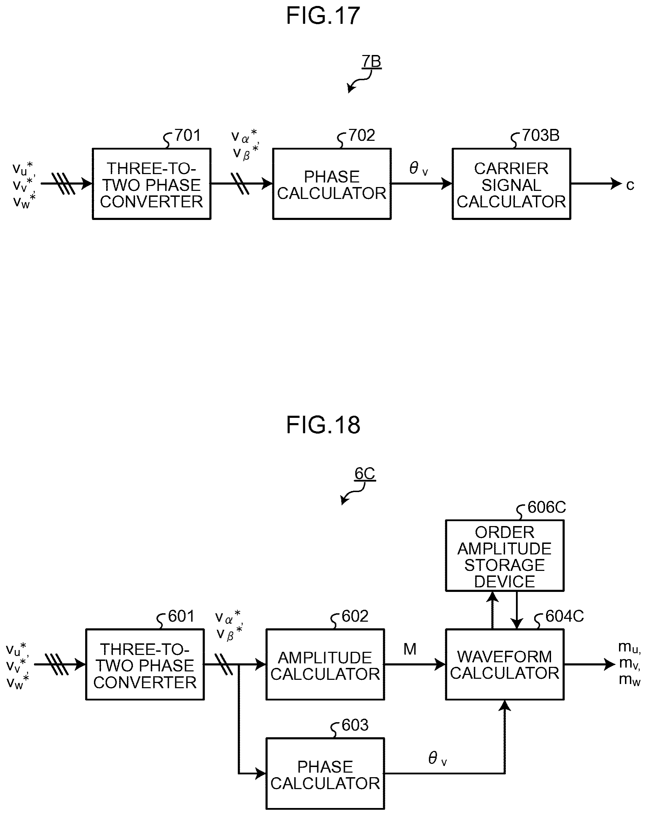

FIG. 17 is a diagram illustrating a configuration of the carrier signal generator 7B illustrated in FIG. 16. The carrier signal generator 7B includes the three-to-two phase converter 701, a phase calculator 702, and a carrier signal calculator 703B. The carrier signal generator 7B includes the carrier signal calculator 703B instead of the carrier signal calculator 703A of the carrier signal generator 7A according to the first embodiment.

The function of the carrier signal calculator 703B is basically similar to that of the carrier signal calculator 703A. The carrier signal calculator 703B differs from the carrier signal calculator 703A in setting an odd number Kc to 15 and generating a carrier signal c having a frequency that is 15 times the fundamental wave component. Regarding the phase synchronization control, the carrier signal generator 7B synchronizes the median value of the triangular wave, specifically, the phase of 270° of the carrier signal c, with the phase of 0° of the first command values $v_u{}^*$, $v_v{}^*$, and $v_w{}^*$, similarly to the carrier signal generator 7A. In the third embodiment, as in the first embodiment, the carrier signal c is synchronized with the phase of the u-phase voltage, and the carrier signal c common to the three phases is used. Therefore, the odd number Kc for determining the frequency of the carrier signal c is set to a multiple of three that is the number of phases.

FIG. 18 is a diagram illustrating a configuration of the modulation voltage generator 6C illustrated in FIG. 16. The modulation voltage generator 6C includes the three-to-two phase converter 601, the amplitude calculator 602, the phase calculator 603, a waveform calculator 604C, and an order amplitude storage device 606C.

The modulation voltage generator 6C includes the waveform calculator 604C instead of the waveform calculator 604A of the modulation voltage generator 6A according to the first embodiment, and includes the order amplitude storage device 606C instead of the waveform storage device 605.

In the order amplitude storage device 606C, information of the optimized second command values $m_u$, $m_v$, and $m_w$ is stored in advance. Specifically, for the amplitude M, the order amplitude storage device 606C stores the amplitude $m_1$ of the fundamental wave component of the second command values $m_u$, $m_v$, and $m_w$, the amplitude of the sine wave to be included as the harmonic component, and how many times the frequency of the sine wave to be included as the harmonic component is the fundamental wave component. Here, the harmonic components have six frequencies that are 3 times, 5 times, 7 times, 9 times, 11 times, and 13 times the fundamental wave component, and amplitudes of $m_3$, $m_5$, $m_7$, $m_9$, $m_{11}$, and $m_{13}$, respectively. Note that $m_1$, $m_3$, $m_5$, $m_7$, $m_9$, $m_{11}$, and $m_{13}$, are stored in association with the respective values of the amplitude M, and the amplitude of the fundamental wave component with respect to the amplitude M is $m_1$ (M), and the amplitude of the sine wave with respect to the amplitude M is $m_3$ (M), $m_5$ (M), $m_7$ (M), $m_9$ (M), $m_{11}$ (M), and $m_{13}$ (M). Here, the harmonic component in a case where the phase of the sine wave is 180° can be reproduced by setting the amplitude to a negative value.

The second command values $m_u$, $m_v$, and $m_w$ are constant values in the carrier half cycle that is a period in which the carrier signal c changes from the minimum value to the maximum value or a period in which the carrier signal c changes from the maximum value to the minimum value. In addition, it is assumed that the waveforms of the second command values $m_u$, $m_v$, and $m_w$ are positively and negatively symmetric in the phases of 0° to 180° and phases of 180° to 360°, and are inversely symmetric in the phases of 0° to 90° and phases of 90° to 180°. In the third embodiment, since the odd number Kc is set to 15, the fundamental wave 1/4 cycle of the second command values $m_u$, $m_v$, and $m_w$ corresponds to 7.5 times the carrier half cycle, but in order to maintain the symmetry of the phase voltage waveform, the second command values $m_u$, $m_v$, and $m_w$ are set to zero in the first 0.5 cycles. Therefore, in the present embodiment, it is sufficient to optimize only seven values corresponding to seven sections of the carrier half cycle, and the optimization is easy. Since the degree of freedom of the waveforms of the second command values $m_u$, $m_v$, and $m_w$ is seven, the original optimal waveform can be reproduced by using the fundamental wave component and the six harmonic components.

In the third embodiment, harmonic components included in the second command value are optimized so as to minimize the objective function $f_{obj}$ expressed in Formula (8) below.
Formula 8:

$$f_{obj} = \sqrt{\sum_{i=1}^{8} \left\{ \left(k_{6i-1} \frac{v_{6i-1}}{6i-1}\right)^2 + \left(k_{6i+1} \frac{v_{6i+1}}{6i+1}\right)^2 \right\}} \quad \cdots (8)$$

Here, the harmonic component is optimized so that the square root of the sum of squares of the value obtained by dividing the n-th harmonic voltage vn by the order n, that is, the effective current value of the load, is minimized. Here, n=6i ±1. However, it is assumed that specific frequency components, here, 11th and 13th harmonic components, excite mechanical resonance of a load to cause large noise and torque pulsation, and weighting of these order components is increased to preferentially reduce the frequency components. That is, as expressed by Formula (9) below, the weight $k_n$ in Formula (8) is larger when n is 11 and when n is 13 than when n is other than 11 and 13. This makes it possible to reduce load loss while reducing noise and torque pulsation.

Formula 9:

$$k_n = \begin{cases} 1 & (n \neq 11, 13) \\ 10 & (n = 11, 13) \end{cases} \qquad \cdots (9)$$

In the present embodiment, the number of phases of the multiphase inverter circuit 3 and the motor 4 is set to three, and the three-phase waveforms are waveforms whose phases are shifted from each other by 120°, so that a harmonic component of a multiple of three is not generated. Furthermore, since the voltage waveform of each phase is positively and negatively symmetric in the phases of 0° to 180° and the phases of 180° to 360°, a harmonic component of a multiple of two is also not generated. In the optimization, harmonic components are considered up to the 50th order.

The waveform calculator 604C calculates the waveforms of the second command values $m_u$, $m_v$, and $m_w$ based on the amplitude M and the fundamental wave phase $\theta_v$. For example, the u-phase second command value $m_u$ (M) is calculated using Formula (10) below.

Formula 10:

$$m_u(M) = m_1(M) \sin \theta_v + m_3(M) \sin 3\theta_v + m_5(M) \sin 5\theta_v$$

$$+ m_7(M) \sin 7\theta_v + m_9(M) \sin 9\theta_v \qquad \cdots (10)$$

$$+ m_{11}(M) \sin 11\theta_v + m_{13}(M) \sin 13\theta_v$$

Since the waveforms of the three-phase second command values $m_u$, $m_v$, and $m_w$ are waveforms whose phases are shifted from each other by 120°, the waveform calculator 604C can generate the three-phase second command values $m_u$, $m_v$, and $m_w$ using the u-phase fundamental wave phase $\theta_v$.

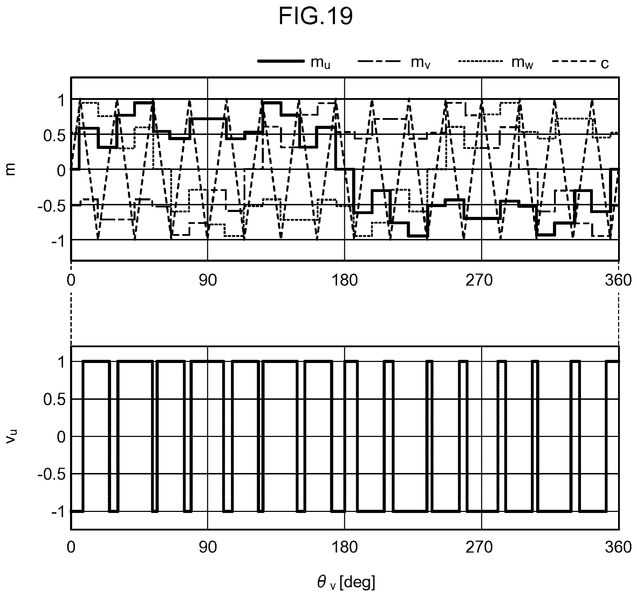

FIG. 19 is a diagram illustrating waveforms of the second command values $m_u$, $m_u$, and $m_w$, the carrier signal c, and the output phase voltage $v_u$ according to the third embodiment. FIG. 19 illustrates a case where the amplitude M=0.8. The second command values $m_u$, $m_v$, and $m_w$ include fundamental wave components of the first command values $v_u^*$, $v_v^*$, and $v_w^*$ and harmonic components including odd-order sine wave components. Here, the harmonic component includes a sine wave component whose frequency is not an integral multiple of the number of phases.

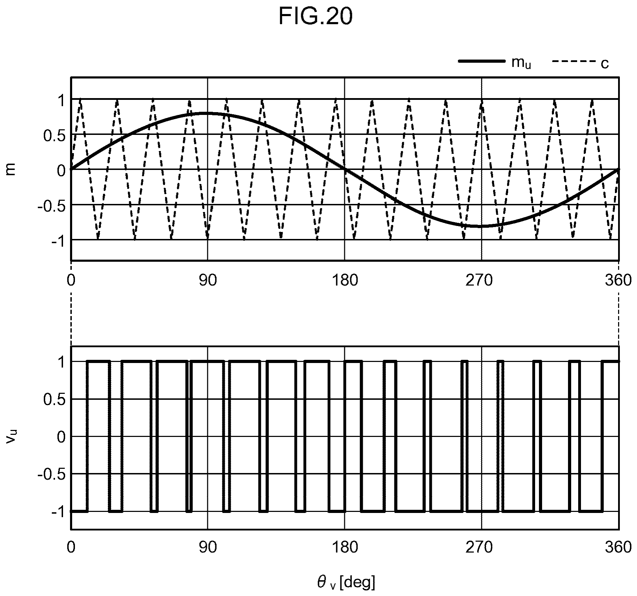

Here, in order to describe the effect of the power conversion device 1C according to the present embodiment, a comparative example using general carrier synchronization PWM will be described. FIG. 20 is a diagram illustrating waveforms of the phase voltage command value, the carrier signal c, and the output phase voltage $v_u$ according to a comparative example of the third embodiment. The difference from the first embodiment illustrated in FIG. 19 is that no harmonic component is superimposed on the phase voltage command value. The same carrier signal c as that in the example illustrated in FIG. 19 is used.

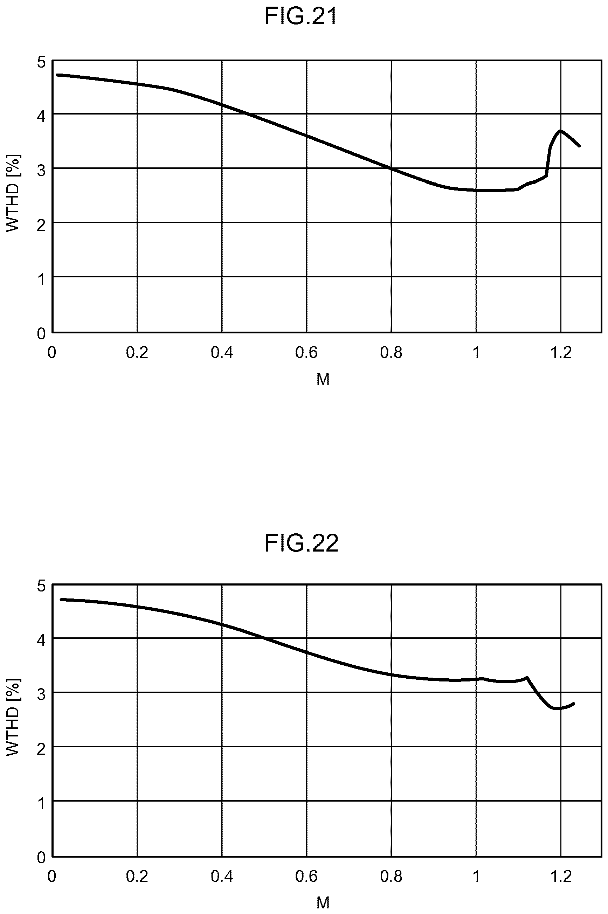

Here, the effective current value of the motor 4 as a load is evaluated by WTHD expressed by Formula (6) above. FIG. 21 is a diagram illustrating the WTHD of the power conversion device 1C according to the third embodiment. FIG. 22 is a diagram illustrating the WTHD in a comparative example of the third embodiment. Comparing FIG. 21 with FIG. 22, it can be confirmed that WTHD can be greatly reduced particularly in a region where the amplitude M of the modulation voltage is large, and the effective current value of the load, that is, the loss can be reduced. However, only in a portion where the amplitude M is close to the maximum value, the power conversion device 1C according to the third embodiment cannot reduce the WTHD as compared with the comparative example. This is because the 11th and 13th harmonic components are preferentially reduced although there is no degree of freedom to change the second command values $m_u$, $m_u$, and $m_w$.

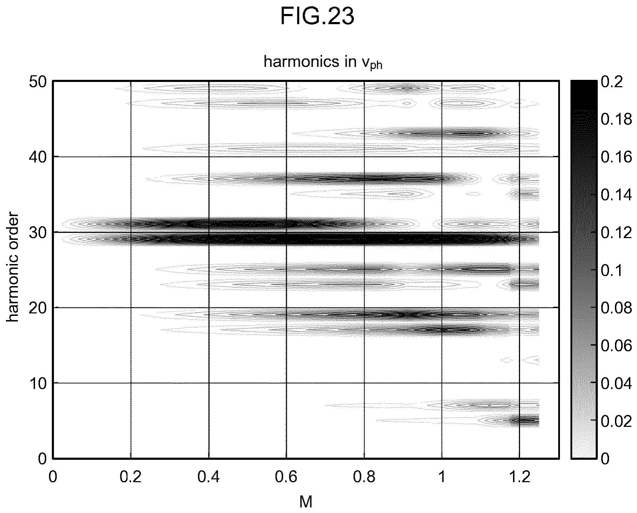

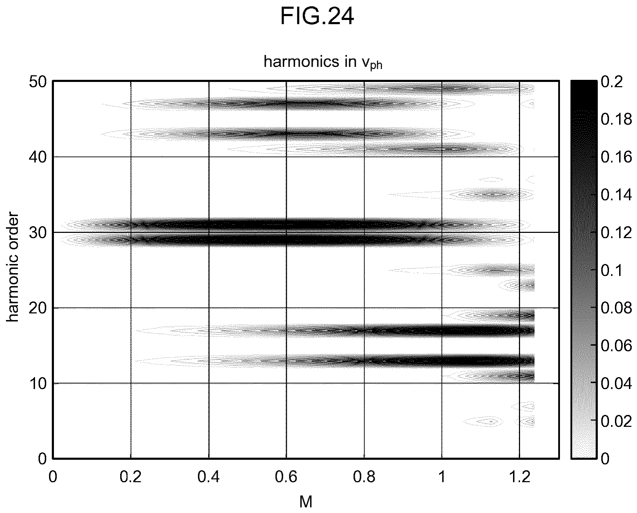

In addition, harmonic components included in the output phase voltage are compared between the power conversion device 1C according to the third embodiment and the comparative example. FIG. 23 is a diagram illustrating the magnitude of harmonic components included in the output phase voltage of the power conversion device 1C according to the third embodiment. FIG. 24 is a diagram illustrating the magnitude of harmonic components included in the output phase voltage in a comparative example of the third embodiment. In FIGS. 23 and 24, the horizontal axis represents the amplitude M, and the vertical axis represents the frequency of the harmonic wave expressed by the order with respect to the fundamental wave. In FIGS. 23 and 24, for the magnitude of the harmonic components, a value obtained by dividing the amplitude $v_{pn}$ of the output phase voltage by half of the DC voltage is indicated by color shading. By comparing FIGS. 23 and 24, it can be seen that in the power conversion device 1C according to the third embodiment, it is possible to greatly reduce specific frequency components assumed to excite mechanical resonance of the load to cause large noise and torque pulsation, here, the 11th and 13th harmonic components. The amplitudes of the 11th and 13th harmonic components are several percent or less of the amplitude M which is the amplitude of the fundamental wave component, and it can be confirmed that the amplitudes are almost removed.

As described above, in the power conversion device 1C according to the third embodiment, the frequency of the carrier signal c is higher than that in the power conversion device 1A according to the first embodiment. However, even in such a case, the frequency distribution of harmonics generated by switching of the multiphase inverter circuit 3 can be optimized with a relatively simple configuration. As a result, the power conversion device 1C can achieve the same effects as those of the first embodiment. In the third embodiment, the modulation voltage generator 6C stores, in the order amplitude storage device 606C, the amplitude of the fundamental wave component, the amplitude of the sine wave included in the harmonic component, and how many times the sine wave included in the harmonic component is the fundamental wave component, and generates the second command values $m_u$, $m_v$, and $m_w$, using the order amplitude storage device 606C. Therefore, as in the second embodiment, even while the phase and frequency of the first command values $v_u^*$, $v_v^*$, and $v_w^*$ change transiently and the phase synchronization control of the carrier signal c does not completely follow the first command values $v_u^*$, $v_v^*$, and $v_w^*$, the voltage according to the first command values $v_u^*$, $v_v^*$, and $v_w^*$ can be supplied to the motor 4 that is a load. Therefore, the voltage to be supplied to the motor 4 can be controlled with high accuracy and high response. In a case where the load is the motor 4 as in the present embodiment, the speed and torque of the motor 4 can be controlled with high accuracy and high response.

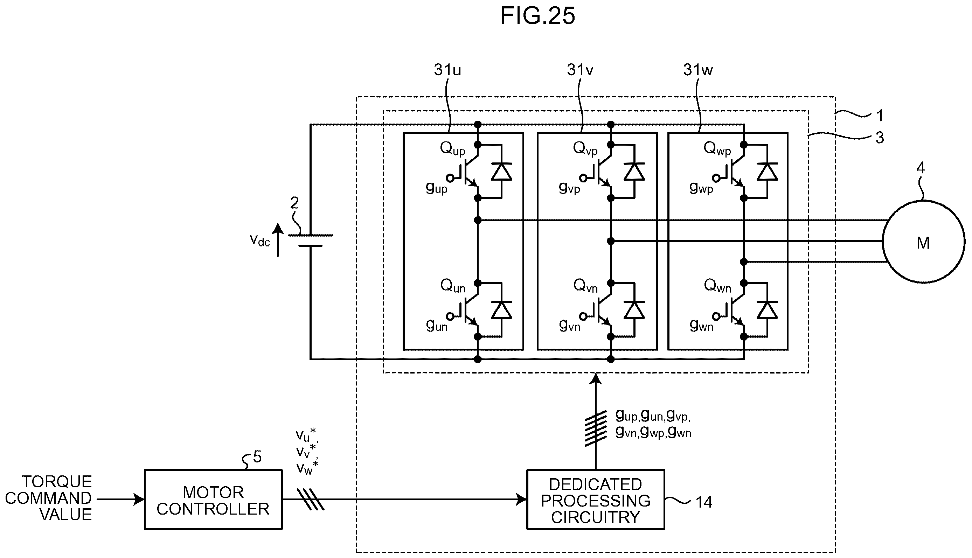

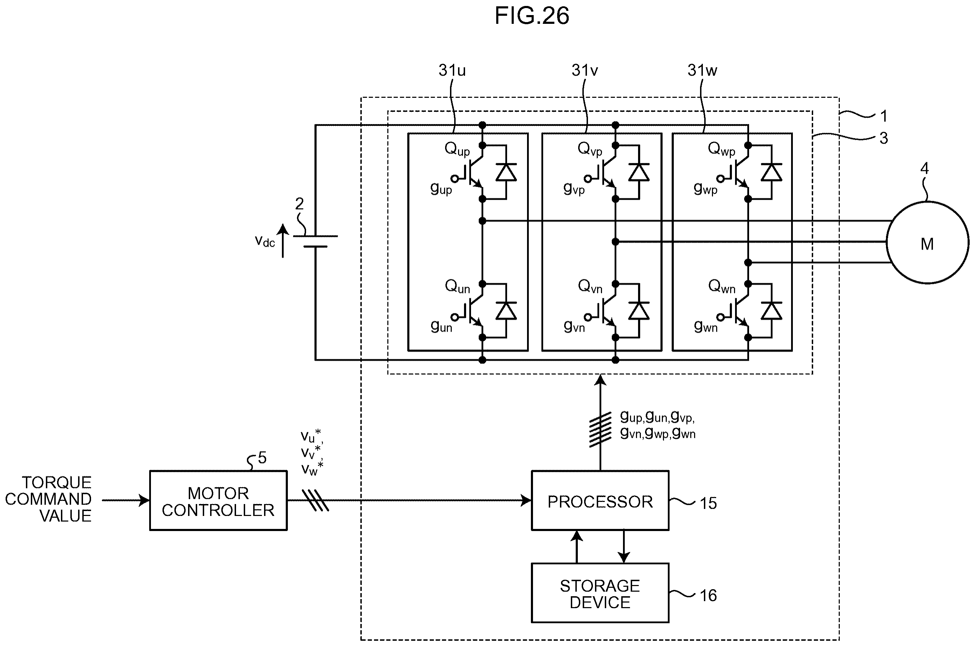

Here, hardware configurations of the power conversion devices 1A, 1B, and 1C according to the first to third embodiments will be described. Here, the power conversion devices 1A, 1B, and 1C are collectively referred to as the power conversion device 1. The functions of the power conversion device 1 can be implemented using processing circuitry. Here, the functions of the power conversion device 1 are the functions of the modulation voltage generators 6A, 6B, and 6C, the carrier signal generators 7A and 7B, and the gate signal generator 8. The processing circuitry may be dedicated hardware such as dedicated processing circuitry 14 illustrated in FIG. 25, or may be a processor 15 and a storage device 16 illustrated in FIG. 26.

FIG. 25 is a diagram illustrating an exemplary configuration of the power conversion device 1 using dedicated hardware. In a case where dedicated hardware is used, the dedicated processing circuitry 14 is a single circuit, a composite circuit, a programmed processor, a parallel programmed processor, an application specific integrated circuit (ASIC), a field programmable gate array (FPGA), or a combination thereof. Each of the plurality of functions of the power conversion device 1 described above may be implemented by different pieces of the dedicated processing circuitry 14, or the plurality of functions of the power conversion device 1 may be collectively implemented by the dedicated processing circuitry 14.

FIG. 26 is a diagram illustrating an exemplary configuration of the power conversion device 1 using a processor and a storage device. In a case where the processor 15 and the storage device 16 are used, the above functions of the power conversion device 1 are implemented by software, firmware, or a combination thereof. Software and firmware are described as programs, and the processor 15 reads and executes the programs stored in the storage device 16. It can also be said that these programs cause a computer to execute the procedures and methods for the functions of the power conversion device 1.

The processor 15 is a central processing unit (CPU), and is also called a processing device, an arithmetic device, a microprocessor, a microcomputer, a digital signal processor (DSP), or the like. The storage device 16 is, for example, a nonvolatile or volatile semiconductor memory such as a read only memory (ROM), an erasable programmable ROM (EPROM), or an electrically EPROM (EEPROM (registered trademark)), a flexible disk, an optical disc, a compact disc, a digital versatile disk (DVD), or the like. In addition, some of the plurality of functions of the power conversion device 1 may be implemented by dedicated hardware, and the others may be implemented by using software or firmware.

The configurations described in the above-mentioned embodiments indicate examples. The embodiments can be combined with another well-known technique and with each other, and some of the configurations can be omitted or changed in a range not departing from the gist.

For example, in the above embodiments, the multiphase inverter circuit 3 is a three-phase inverter circuit. However, the multiphase inverter circuit 3 may be an inverter circuit having a different number of phases, or various inverter circuits such as a multi-level inverter exemplified by a 3-level inverter or a 5-level inverter can be used.

In the above embodiments, when the median value of the triangular wave that is the carrier signal c is synchronized with the phase of 0° of the first command values $v_u^*$, $v_v^*$, and $v_w^*$, the carrier signal generators 7A and 7B use the median value on the rising side of the triangular wave, which is the phase of 270° in the example of FIG. 3. However, the carrier signal generators 7A and 7B may synchronize the median value on the decreasing side of the triangular wave, that is, the phase of 90° in the example of FIG. 3, with the phase of 0° of the first command values $v_u^*$, $v_v^*$, and $v_w^*$.

Further, in the above embodiments, the carrier signal generators 7A and 7B generate the common carrier signal c in all the phases, but the carrier signal c for each phase may be prepared.

In the above embodiments, the second command values $m_u$, $m_v$, and $m_w$ are constant in the carrier half cycle in which the carrier signal c changes from the minimum value to the maximum value or from the maximum value to the minimum value. However, in a case where a high-speed arithmetic device can be used, smoother second command values $m_u$, $m_v$, and $m_w$ updated at a sufficiently short cycle with respect to the carrier signal c may be used.

In the above embodiments, only an odd-order sine wave component is superimposed on the fundamental wave component with respect to the second command values $m_u$, $m_v$, and $m_w$ which are phase voltage command values for modulation obtained by dividing the first command values $v_u{}^*$, $v_v{}^*$, and $v_w{}^*$ by half of the DC voltage $v_{dc}$, so that the second command values $m_u$, $m_v$, and $m_w$ including the fundamental wave component and a harmonic component including at least one sine wave having a frequency of an odd multiple of the fundamental wave component are generated, and the waveforms of the second command values $m_u$, $m_v$, and $m_w$ are optimized. However, only the odd-order sine wave component may be superimposed on the fundamental wave component with respect to the first command values $v_u{}^*$, $v_v{}^*$, and $v_w{}^*$ which are original phase voltage command values.

In the first and second embodiments, the fifth and seventh harmonic components are preferentially reduced as specific frequency components, and in the third embodiment, the 11th and 13th harmonic components are preferentially reduced. As described above, considering the symmetry of the voltage waveform, a harmonic component of an integral multiple of the number of phases or an even-order harmonic component is not generated. Given that k is an integer, harmonic components in the case of the three phases can be expressed as $(6k \pm 1)$-th harmonic components. In addition to those exemplified above, it is possible to preferentially reduce a component freely selected from the $(6k \pm 1)$-th harmonic components.

Reference Signs List

1, 1A, 1B, 1C power conversion device; 2 DC power supply; 3 multiphase inverter circuit; 4 motor; 5 motor controller; 6A, 6B, 6C modulation voltage generator; 7A, 7B carrier signal generator; 8 gate signal generator; 14 dedicated processing circuitry; 15 processor; 16 storage device; 31, 31u, 31v, 31w leg; 601, 701 three-to-two phase converter; 602 amplitude calculator; 603, 702 phase calculator; 604A, 604B, 604C waveform calculator; 605 waveform storage device; 606B, 606C order amplitude storage device; 703A, 703B carrier signal calculator.

**Claims**

1. A power conversion device to supply power to a multiphase load based on a first command value, the first command value being a sinusoidal phase voltage command value, the power conversion device comprising:

   a multiphase inverter circuit in which legs each including two series-connected semiconductor switching elements having reverse conduction functions are connected in parallel between positive and negative terminals of a DC power supply, the number of the legs being equal to the number of phases, and a terminal between the two semiconductor switching elements in each of the plurality of legs is connected to each phase of the load;
   a modulation voltage generator to generate a second command value, the second command value being a phase voltage command value for modulation and including a fundamental wave component of the first command value and a harmonic component including at least one sine wave having a frequency that is an odd multiple of the fundamental wave component;
   a carrier signal generator to generate a carrier signal of a triangular wave having a frequency that is an odd multiple of the fundamental wave component of the first command value, the triangular wave having a median value synchronized with a phase zero of the fundamental wave component of the first command value; and
   a gate signal generator to generate a gate signal for driving the semiconductor switching elements in accordance with a result of comparison between the second command value and the carrier signal.

2. The power conversion device according to claim 1, wherein
   the harmonic component included in the second command value includes at least one sine wave having a frequency that is an odd multiple of the fundamental wave component of the first command value, and not an integer multiple of the number of phases of the multiphase inverter circuit.

3. The power conversion device according to claim 1 or 2, wherein
   the modulation voltage generator stores, in a storage device, the second command value corresponding to 1/4 cycles of the fundamental wave component of the first command value, and generates the second command value, using the storage device.

4. The power conversion device according to claim 1 or 2, wherein

the modulation voltage generator stores, in a storage device, an amplitude of the fundamental wave component, an amplitude of a sine wave included in the harmonic component, and how many times a frequency of the sine wave included in the harmonic component is the fundamental wave component, and generates the second command value, using the storage device.

5. The power conversion device according to any one of claims 1 to 4, wherein

the carrier signal generator generates the carrier signal having a frequency that is nine times the fundamental wave component, and
the harmonic component includes sine waves of three frequencies.

6. The power conversion device according to claim 5, wherein
the harmonic component includes sine waves having frequencies that are three times, five times, and seven times the fundamental wave component.

7. The power conversion device according to any one of claims 1 to 4, wherein

the carrier signal generator generates the carrier signal having a frequency that is 15 times the fundamental wave component, and
the harmonic component includes sine waves of six frequencies.

8. The power conversion device according to claim 7, wherein
the harmonic component includes sine waves having frequencies that are 3 times, 5 times, 7 times, 9 times, 11 times, and 13 times the fundamental wave component.

9. The power conversion device according to any one of claims 1 to 8, wherein
the frequency of the carrier signal is a multiple of the fundamental wave component, the multiple being an odd number and an integer multiple of the number of phases of the multiphase inverter circuit.

10. The power conversion device according to any one of claims 1 to 9, wherein
the modulation voltage generator keeps the second command value constant in a carrier half cycle that is a period in which the carrier signal changes from a minimum value to a maximum value or a period in which the carrier signal changes from a maximum value to a minimum value.

11. The power conversion device according to any one of claims 1 to 10, wherein
an effective current value of the load is lower than that in a case where the second command value does not include the harmonic component.

12. The power conversion device according to any one of claims 1 to 10, wherein
an amplitude of a predetermined frequency component included in a phase voltage of the load is lower than that in a case where the second command value does not include the harmonic component.

13. A method for controlling a power conversion device to supply power to a multiphase load based on a first command value, the first command value being a sinusoidal phase voltage command value, the power conversion device having a multiphase inverter circuit in which legs including two series-connected semiconductor switching elements having reverse conduction functions are connected in parallel between positive and negative terminals of a DC power supply, the number of the legs being equal to the number of phases, and a terminal between the two semiconductor switching elements in each of the plurality of legs is connected to each phase of the load, the method comprising:

a step of generating a second command value, the second command value being a phase voltage command value for modulation and including a fundamental wave component of the first command value and a harmonic component including at least one sine wave having a frequency that is an odd multiple of the fundamental wave component;
a step of generating a carrier signal of a triangular wave having a frequency that is an odd multiple of the fundamental wave component of the first command value, the triangular wave having a median value synchronized with a phase zero of the fundamental wave component of the first command value; and
a step of generating a gate signal for driving the semiconductor switching elements in accordance with a result of comparison between the second command value and the carrier signal.

FIG.1

# FIG.2

7A

$v_u^*,$
$v_v^*,$
$v_w^*$ →→→ | 701 THREE-TO-TWO PHASE CONVERTER | →→ $v_\alpha^*,$ $v_\beta^*$ | 702 PHASE CALCULATOR | → $\theta_v$ | 703A CARRIER SIGNAL CALCULATOR | → c

# FIG.3

## FIG.4

# FIG.5

# FIG.6

FIG.7

6A

# FIG.8

# FIG.9

## FIG.10

## FIG.11

# FIG.12

harmonics in $v_{ph}$

FIG.13

harmonics in $v_{ph}$

# FIG.14

EP 4 661 275 A1

# FIG.15

6B

FIG.16

# FIG.17

7B

$v_u^*,$
$v_v^*,$
$v_w^*$ → ┌─701─┐ THREE-TO-TWO PHASE CONVERTER → $v_\alpha^*,$ $v_\beta^*$ → ┌─702─┐ PHASE CALCULATOR → $\theta_v$ → ┌─703B─┐ CARRIER SIGNAL CALCULATOR → c

# FIG.18

6C

$v_u^*,$
$v_v^*,$
$v_w^*$ → ┌─601─┐ THREE-TO-TWO PHASE CONVERTER → $v_\alpha^*,$ $v_\beta^*$ → ┌─602─┐ AMPLITUDE CALCULATOR → M → ┌─604C─┐ WAVEFORM CALCULATOR → $m_u,$ $m_v,$ $m_w$

┌─606C─┐ ORDER AMPLITUDE STORAGE DEVICE

┌─603─┐ PHASE CALCULATOR → $\theta_v$

# FIG.19

# FIG.20

## FIG.21

## FIG.22

# FIG.23

harmonics in $v_{ph}$

# FIG.24

harmonics in $v_{ph}$

# FIG.25

EP 4 661 275 A1

# FIG.26

EP 4 661 275 A1

## INTERNATIONAL SEARCH REPORT

| International application No. |
|---|
| **PCT/JP2023/003220** |

| A. | CLASSIFICATION OF SUBJECT MATTER |
|---|---|

*H02M 7/48*(2007.01)i; *H02M 1/12*(2006.01)i; *H02P 27/08*(2006.01)i
FI: H02M7/48 F; H02M1/12; H02P27/08

According to International Patent Classification (IPC) or to both national classification and IPC

| B. | FIELDS SEARCHED |
|---|---|

Minimum documentation searched (classification system followed by classification symbols)

H02M7/48; H02M1/12; H02P27/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2014-72935 A (HITACHI, LTD.) 21 April 2014 (2014-04-21) <br> paragraphs [0001]-[0025], fig. 1-23 | 1-13 |
| A | JP 2006-20381 A (HITACHI, LTD.) 19 January 2006 (2006-01-19) <br> paragraphs [0001]-[0156], fig. 1-11 | 1-13 |
| A | WO 2019/016901 A1 (MITSUBISHI ELECTRIC CORPORATION) 24 January 2019 (2019-01-24) <br> paragraphs [0001]-[0086], fig. 1-15 | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 March 2023** | **20 March 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/003220**

| Patent document cited in search report | | | Publication date (day/month/year) | Patent family member(s) | | | Publication date (day/month/year) |
|---|---|---|---|---|---|---|---|
| JP | 2014-72935 | A | 21 April 2014 | EP paragraphs [0001]-[0099], fig. 1-23 | 2713501 | A2 | |
| JP | 2006-20381 | A | 19 January 2006 | US paragraphs [0001]-[0204], fig. 1-11 | 2006/0001392 | A1 | |
| | | | | EP | 1612924 | A2 | |
| | | | | CN | 1716753 | A | |
| WO | 2019/016901 | A1 | 24 January 2019 | US paragraphs [0001]-[0101], fig. 1-15 | 2020/0403548 | A1 | |
| | | | | EP | 3657669 | A1 | |
| | | | | CN | 110915131 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014072935 A

- WO 2019016901 A